# EUROPÄISCHE PATENTSCHRIFT

(11) **EP 3 562 568 B1**
(45) Veröffentlichungstag und Bekanntmachung des Hinweises auf die Patenterteilung: **28.02.2024**
(21) Anmeldenummer: 17811247.0
(22) Anmeldetag: 27.11.2017
(51) Int. Cl.: B01D 3/08, B01D 1/30, B01D 3/10

(54) **ROTATIONSVERDAMPFER MIT EINEM FILTER**
ROTARY EVAPORATOR HAVING A FILTER
ÉVAPORATEUR ROTATIF MUNI D'UN FILTRE

(30) Priorität: 16.01.2017 DE 102017100752
(43) Veröffentlichungstag der Anmeldung: 06.11.2019
(73) Patentinhaber: Hans Heidolph GmbH, 93309 Kelheim (DE)
(72) Erfinder: LÖSCHEL, Robert, 91126 Schwabach (DE)
(74) Vertreter: Manitz Finsterwald Patent- und Rechtsanwaltspartnerschaft mbB
(86) Internationale Anmeldenummer: PCT/EP2017/080513
(87) Internationale Veröffentlichungsnummer: WO 2018/130334

(56) Entgegenhaltungen:
- EP-A1- 2 275 183
- US-A1- 2003 141 177
- Büchi: "Laboratory Evaporation Glassware", , 8. November 2016 (2016-11-08), XP055450598, Gefunden im Internet: URL:https://web.archive.org/web/2018021215 5523if_/http://static1.buchi.com/sites/def ault/files/downloads/Laboratory_Evaporatio n_Glassware_Solutions_en_C_0.pdf?9a647f92c c55c9b1c6766ea40642ee35eef3abe2 [gefunden am 2018-02-13]
- Anonymous: "Rotavapor R-300 | buchi.com", , 8. November 2016 (2016-11-08), XP055450528, Gefunden im Internet: URL:https://web.archive.org/web/2016110818 4102/http://www.buchi.com:80/bx-en/product s/laboratory-evaporation/rotavapor-r-300 [gefunden am 2018-02-13]

## Beschreibung

Die vorliegende Erfindung betrifft einen Rotationsverdampfer mit einem Rotationsantrieb, einem von dem Rotationsantrieb um eine Rotationsachse drehbaren Verdampferkolben, einer, insbesondere durch den Rotationsantrieb hindurchgeführten, Dampfdurchführung und einem an die Dampfdurchführung in Dampfströmungsrichtung anschließenden Glasaufbau.

Rotationsverdampfer sind Laborgeräte, die meist zum Verdampfen von Destillaten wie zum Beispiel Lösungsmitteln eingesetzt werden. Üblicherweise wird der am Rotationsantrieb befestige Verdampferkolben mittels eines Heizbads, einer Heizkalotte, eines Heizpilzes oder eines Heizköchers erwärmt. Durch die Rotation wird der Verdampferkolben gleichmäßig beheizt und an der beheizten Innenwand des Verdampferkolbens wird ein dünner, eine große Oberfläche aufweisender Flüssigkeitsfilm erzeugt, aus dem das Destillat schnell, effizient und schonend verdampft werden kann. Das verdampfte Destillat strömt über eine Dampfdurchführung in einen Kühler des Rotationsverdampfers, um dort zu kondensieren. Anschließend wird das Kondensat in einem Auffangkolben gesammelt. Der im Verdampferkolben zurückbleibende Destillationsrückstand kann weiter aufgearbeitet oder analysiert werden. In der Regel ist zusätzlich eine Vakuumpumpe zur Erzeugung eines Vakuums in dem Verdampferkolben und dem Kühler vorgesehen, um die Siedetemperatur zu senken, wodurch die Destillation beschleunigt und die Destillationsrate dementsprechend erhöht werden kann.

Rotationsverdampfer werden aber auch dazu eingesetzt, Pulver unterschiedlicher Konsistenz und Korngröße zu trocknen. Dabei besteht das Problem, dass mit steigendem Trocknungsgrad des in dem Verdampferkolben befindlichen Pulvers Pulverstaub entsteht, der, insbesondere zusammen mit dem Lösungsmitteldampf, aufsteigen und so in den Kühler und das Vakuumsystem des Rotationssystems gelangen kann. Um eine aufwändige Reinigung des Kühlers und eine eventuelle Schädigung der Vakuumpumpe zu vermeiden, wird das Pulver deshalb häufig nicht vollständig getrocknet, sondern der Trocknungsvorgang wird zu einem früheren Zeitpunkt, zu dem das Pulver zumindest noch eine geringe Restfeuchtigkeit besitzt, abgebrochen. Zur vollständigen Trocknung muss der Verdampferkolben dann in einen geeigneten Ofen gestellt werden.

Aus der Broschüre "Laboratory Evaporation Glassware", Büchi, ist ein Rotationsverdampfer gemäß dem Oberbegriff des Anspruchs 1 bekannt.

Der Erfindung liegt die Aufgabe zugrunde, eine vollständige Pulvertrocknung in einem Rotationsverdampfer zu ermöglichen, ohne dass dabei die vorgenannten Nachteile auftreten.

Diese Aufgabe wird durch einen Rotationsverdampfer mit den Merkmalen des Anspruchs 1 gelöst, und insbesondere dadurch, dass ein dem Glasaufbau, insbesondere der Dampfdurchführung, insbesondere in Dampfströmungsrichtung, vorgeschalteter Filter zum Filtern von Feststoffen, insbesondere eines Pulvers, aus einem Dampfstrom vorgesehen ist.

Ein derartiger Filter ist zwar durchlässig für das jeweilige Lösungsmittel, jedoch nicht für das zu trocknende Pulver. Durch den Einsatz eines derartigen Filters kann das Pulver daher vollständig getrocknet werden, wobei gleichzeitig gewährleistet ist, dass das Pulver bzw. der Pulverstaub dabei nicht in die der Dampfdurchführung nachgeordneten Glasgeräte, insbesondere den Kühler, und das Vakuumsystem gelangen kann. Vielmehr bleiben in dem Verdampferkolben aufsteigende Pulverpartikel an der Oberfläche des Filters zurück. Damit kann eine vollständige Trocknung eines Pulvers in dem Rotationsverdampfer erfolgen, d.h. der Trocknungsvorgang kann in dem Rotationsverdampfer selbst abgeschlossen werden. Eine nachfolgende, separate Endtrocknung des Pulvers in einem Ofen oder dergleichen ist nicht erforderlich.

Der der Dampfdurchführung nachgeordnete Glasaufbau des Rotationsverdampfers muss daher auch nach Durchführung einer vollständigen Pulvertrocknung nicht gereinigt werden. Bei der Dampfdurchführung vorgeschaltetem Filter kann zusätzlich auch eine Reinigung der Dampfdurchführung vermieden werden. Bei in der Dampfdurchführung angeordnetem Filter muss auch die Dampfdurchführung gereinigt werden. Der Glasaufbau umfasst zumindest einen Kühler, bevorzugt zusätzlich ein oder mehrere Glasgeräte, die den Kühler mit der Dampfdurchführung und/oder dem Vakuumsystem verbinden und/oder einen Auffangkolben.

Zur Reinigung des Rotationsverdampfers muss lediglich der Filter, und unter Umständen zusätzlich die Dampfdurchführung, gereinigt werden. Insbesondere ist der Filter im Bereich der Schnittstelle zwischen Rotationsantrieb und Verdampferkolben angeordnet, so dass er leicht zugänglich ist, insbesondere deshalb, da der Verdampferkolben zum Befüllen und nach einer Pulvertrocknung ohnehin abgenommen werden muss. Bei dem der Dampfdurchführung nachgeschalteten Glasaufbau kann es sich auch bei Vorsehen eines Filters weiterhin um einen Standard-Glasaufbau bzw. -Glassatz handeln, da er nicht speziell für die Aufnahme des Filters ausgebildet sein muss. Der Filter kann gereinigt oder gegen einen anderen Filter getauscht werden. Insbesondere ist der Filter als ein, insbesondere von der Dampfdurchführung und/oder dem Rotationsverdampfer, separates Bauteil ausgebildet. Bevorzugt handelt es sich bei dem Filter um ein optionales Zubehörteil, mit dem der Rotationsverdampfer zur Durchführung einer Pulvertrocknung wahlweise versehen werden kann.

Bislang musste eine Pulvertrocknung vergleichsweise schonend durchführt werden. Mit dem erfindungsgemäß vorgesehenen Filter ist eine schnellere Trocknung möglich.

Insbesondere ist der Rotationsverdampfer derart ausgebildet, dass der Filter mit dem Verdampferkolben mitdreht. Vorzugsweise ist ein Anschlussabschnitt für den Verdampferkolben vorgesehen, der an dem Rotationsantrieb angebracht ist, wobei der Filter antriebswirksam mit dem Anschlussabschnitt verbunden ist. Grundsätzlich ist es jedoch auch möglich, dass der Filter feststehend ausgebildet ist. Dies könnte insbesondere dann der Fall sein, wenn auch die Dampfdurchführung feststehend ausgebildet und der Filter an der feststehenden Dampfdurchführung befestigt ist. Der Filter kann jedoch auch bei einem Rotationsverdampfer mit einer drehenden Dampfdurchführung vorgesehen sein, z.B. wenn der Verdampferkolben über eine Schliffverbindung mit der Dampfdurchführung verbunden ist.

Nach einer bevorzugten Ausführungsform ist der Filter an einer, insbesondere als separates Bauteil ausgebildeten, Dichteinrichtung, insbesondere einer Dichtscheibe mit einer Durchführung für die Dampfdurchführung, befestigt, durch die die Dampfdurchführung gegenüber dem Anschlussabschnitt abgedichtet ist. Dies ist insbesondere dann von Vorteil, wenn die Dampfdurchführung bezüglich der Rotationsachse unverdrehbar bzw. feststehend ist.

Der Anschlussabschnitt kann eine Aufnahme für den Verdampferkolben, insbesondere einen Kolbenhals des Verdampferkolbens, aufweisen, in die die Dichteinrichtung eingesetzt ist. Dabei kann die Aufnahme einen Aufnahmegrund aufweisen, und die Dichteinrichtung kann zwischen dem Aufnahmegrund und einem Hals des Verdampferkolbens, insbesondere einer flanschförmigen Verbindungsstelle des Halses des Verdampferkolbens, angeordnet, insbesondere geklemmt, sein. Unabhängig von einer Klemmung durch den Verdampferkolben kann die Dichteinrichtung verliersicher in die Aufnahme eingesetzt sein.

Dabei kann die Dichteinrichtung einen Dichtringträger und einen Dichtring mit wenigstens einer umlaufenden Dichtlippe zur dichtenden Anlage an die Dampfdurchführung aufweisen. Der Dichtring kann dabei in eine ringförmige Vertiefung des Dichtringträgers und/oder eine ringförmige Vertiefung des Aufnahmegrunds eingesetzt sein.

Der Filter kann durch eine Schraubverbindung mit der Dichteinrichtung verbunden sein. Insbesondere hierfür kann die Dichteinrichtung einen in Richtung der Rotationsachse gerichteten, insbesondere umlaufenden, Kragenabschnitt aufweisen, an dem der Filter befestigt, insbesondere angeschraubt, ist.

Sofern der Rotationsverdampfer nicht für eine Pulvertrocknung eingesetzt wird und ein erfindungsgemäßer Filter somit nicht erforderlich ist, kann eine weitere Dichteinrichtung vorgesehen sein, durch die die Dampfdurchführung gegenüber dem Anschlussabschnitt abdichtbar ist, an der der Filter ohne weitere Hilfsmittel nicht befestigbar ist und die anstelle der Dichteinrichtung, an der der Filter befestigt ist, mit dem Rotationsverdampfer verwendbar ist.

Vorzugsweise ragt der Filter, insbesondere ausgehend von der vorgenannten Dichteinrichtung und/oder einer Schnittstelle zwischen der Dampfdurchführung und dem Verdampferkolben, in den Verdampferkolben, insbesondere einen Kolbenhals des Verdampferkolbens, hinein. Grundsätzlich ist es aber auch möglich, dass die Dichteinrichtung in die Dampfdurchführung hinein ragt. Allerdings wird üblicherweise der Innenquerschnitt der Dampfdurchführung kleiner sein als der Innenquerschnitt des Kolbenhalses des Verdampferkolbens, so dass ein Hineinragen in den Verdampferkolben bevorzugt ist. Gemäß einer Ausführungsform ist der Filter auch dann der Dampfdurchführung vorgeschaltet, wenn er sich von der Schnittstelle zwischen der Dampfdurchführung und dem Verdampferkolben in die Dampfdurchführung hinein erstreckt.

Der Filter ist zumindest teilweise, insbesondere vollständig, innerhalb des Verdampferkolbens angeordnet. Der Filter ist dann auch gut sichtbar, und es kann durch eine Sichtprüfung auf einfache Weise kontrolliert werden, wieviel Pulver sich bereits auf dem Filter niedergeschlagen hat.

Gemäß einer Ausführungsform ist der Filter Teil einer Filtereinheit, die zerstörungsfrei in mehrere Teile zerlegbar. Der Filter kann dann besonders einfach gereinigt werden.

Der Filter ist bevorzugt als ein länglicher Hohlkörper, insbesondere rohrförmig, ausgebildet. Ein länglicher, als Hohlkörper ausgebildeter Filter besitzt gegenüber einem lediglich scheiben- oder plattenförmigen Filter eine größere Oberfläche, d.h. das im Rotationsverdampfer aufsteigende und sich am Filter sammelnde Pulver kann sich über eine größere Fläche verteilen, so dass ein Verstopfen des Filters auch bei längerem Betrieb vermieden werden kann.

Der Filter kann an einem stirnseitigen Ende mit einem Verbindungsabschnitt, insbesondere einen Verbindungsflansch, zur Befestigung des Filters versehen sein und/oder an einem, insbesondere in den Verdampferkolben hineinragenden, stirnseitigen Ende mit einem Verschlusselement, insbesondere einem Deckel, verschlossen sein. Durch das Verschlusselement kann sichergestellt werden, dass kein Pulver in den hinter dem Verdampferkolben bzw. hinter der Dampfdurchführung angeordneten Glasaufbau gelangt.

Bevorzugt ist der Filter aus einem, insbesondere gesinterten, porösen Material, insbesondere Glas, Keramik oder Kunststoff, gefertigt. Das poröse Material kann Porengrößen von beispielsweise 0,1 µm bis 500 µm aufweisen. Bei dem Filter kann es sich also um einen porösen Sinterfilter, insbesondere aus Glas, bevorzugt Borosilikatglas, handeln. Bei dem Filter kann es sich also um eine Fritte handeln. Eine Fritte ist ein Filter aus Glas oder Keramik, der zum Filtern auch feinster Partikel verwendet wird. Das Glas oder die Keramik sind porös, so dass der herauszufilternde Stoff wie in einem sehr feinen Sieb in den Poren hängen bleibt. Grundsätzlich kann der Filter aber auch ein Filterpapier oder dergleichen umfassen.

Für eine Anpassung an Pulver unterschiedlicher Konsistenz und/oder Korngröße können mehrere Filter vorgesehen sein, die sich voneinander unterscheiden, insbesondere in Konstruktion, Abmessung, Material und/oder Porosität, und die wahlweise mit dem Rotationsverdampfer verwendbar sind.

Es können auch mehrere hintereinander geschaltete Filter vorgesehen sein, die jeweils Teil einer gemeinsamen, insbesondere mehrstufigen, Filtereinheit sind. Die mehreren Filter können sich voneinander unterscheiden, insbesondere in Konstruktion, Abmessung, Material und/oder Porosität.

Die vorliegende Erfindung betrifft ferner einen Filter zum Filtern von Feststoffen aus einem Dampfstrom für einen Rotationsverdampfer mit einem Rotationsantrieb, einem von dem Rotationsantrieb um eine Rotationsachse drehbaren Verdampferkolben, einer Dampfdurchführung und einem an die Dampfdurchführung in Dampfströmungsrichtung anschließenden Glasaufbau, wobei der Filter dem Glasaufbau, insbesondere der Dampfdurchführung, vorschaltbar ist. Weiterbildungen des erfindungsgemäßen Filters ergeben sich in analoger Weise aus den entsprechenden Weiterbildungen des erfindungsgemäßen Rotationsverdampfers.

Ein nicht beschränkendes Ausführungsbeispiel der Erfindung ist in der Zeichnung dargestellt und wird nachfolgend beschrieben. Es zeigen, in schematischer Darstellung,
- Fig. 1: einen Längsschnitt durch einen von einem Rotationsantrieb eines Rotationsverdampfers drehbaren Anschlussabschnitt für einen Verdampferkolben, und
- Fig. 2: einen erfindungsgemäßen Filter.

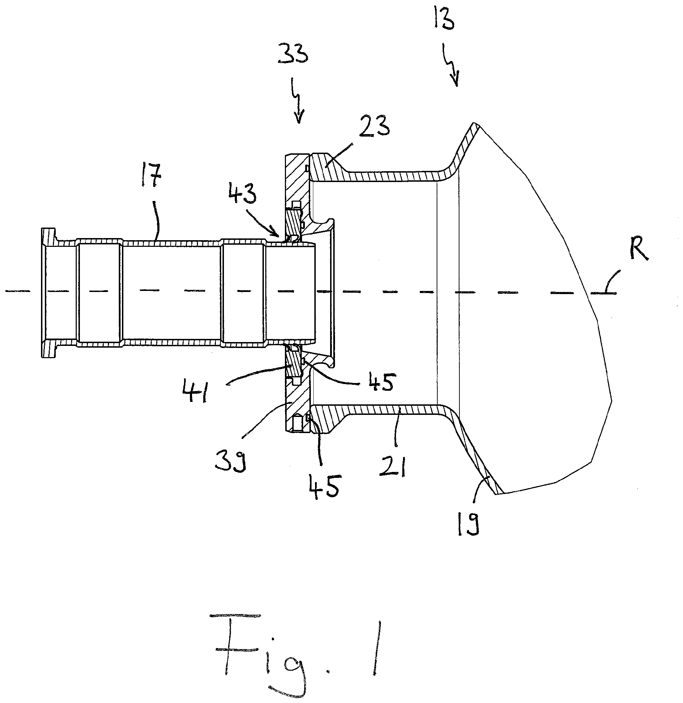

In Fig. 1 ist ein Verdampferkolben 13 gezeigt, der von einem nicht dargestellten Rotationsantrieb eines Rotationsverdampfers um eine Rotationsachse R gedreht werden kann. Der Verdampferkolben 13 ist zum Aufnehmen eines Flüssigkeitsgemischs oder eines zu trocknenden Pulvers geeignet und vollständig aus Glas gefertigt. Während des Betriebs des Rotationsverdampfers gelangt verdampftes Lösungsmittel durch eine als Glashohlwelle ausgebildete Dampfdurchführung 17 in einen nicht dargestellten Kühler des Rotationsverdampfers. Die Dampfdurchführung 17 ist gegenüber der Rotationsachse R unverdrehbar. Der Verdampferkolben 13 umfasst einen Bauch 19 und einen Hals 21, der eine umlaufende flanschförmige Verbindungsstelle 23 aufweist.

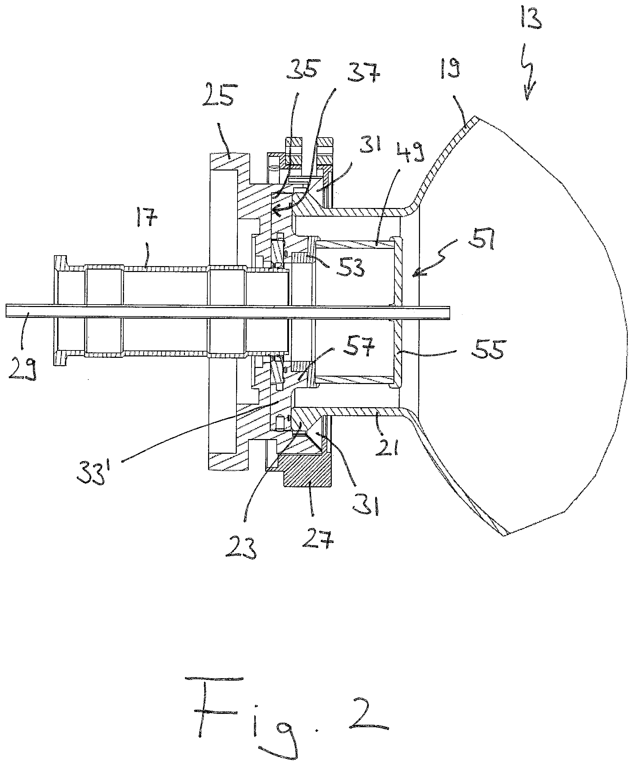

Der Verdampferkolben 13 ist an einem nur in Verbindung mit der Fig. 2 dargestellten, mit dem Rotationsantrieb des Rotationsverdampfers fest verbundenen Anschlussabschnitt 25 befestigbar, insbesondere mittels eines Überwurfelements 27, wie es aus der DE 10 2014 110 343 A1 bekannt ist. Gemäß dieser Druckschrift, auf deren Inhalt hier vollumfänglich referenziert wird und deren Inhalt durch Bezugnahme in den Offenbarungsgehalt der vorliegenden Anmeldung aufgenommen wird, werden beim Verdrehen des Überwurfelements 27 relativ zu dem Anschlussabschnitt 25 Klemmelemente 31 radial nach innen bewegt, um die flanschförmige Verbindungsstelle 23 und damit den Verdampferkolben 13 form- und/oder kraftschlüssig an dem Anschlussabschnitt 25 festzuhalten.

Dabei ist eine als Dichtscheibe ausgebildete Dichteinrichtung 33 vorgesehen, die eine zentrale Durchführung aufweist, durch welche die Dampfdurchführung 17 hindurchragt, und die beim Befestigung des Verdampferkolbens 13 an dem Anschlussabschnitt 25 zwischen der flanschförmigen Verbindungsstelle 23 des Verdampferkolbens 13 und dem Anschlussabschnitt 25 verklemmt wird.

Die Dichteinrichtung 33 umfasst einen Dichtringträger 39 und einen in eine ringförmige Vertiefung des Dichtringträgers 39 eingesetzten Dichtring 41. Der Dichtring 41 ist aus einem elastisch verformbaren Material, insbesondere aus PTFE, hergestellt und mit wenigstens einer Dichtlippe, in dem dargestellten Ausführungsbeispiel mit zwei, in axialer Richtung voneinander beabstandeten, radial umlaufenden Dichtlippen 43, versehen. Der Dichtringträger 39 ist ebenfalls vorzugsweise aus PTFE gefertigt. An den beiden axialen Stirnseiten des Dichtringträgers 39 sind jeweilige O-Ringe 45 angeordnet. Die beiden Dichtlippen 43 liegen dichtend an der Außenseite der Dampfdurchführung 17 an. Aufgrund ihrer Krümmung legen sich die Dichtlippen 43 sogar noch stärker an die Dampfdurchführung 17 an, wenn während des Betriebs des Rotationsverdampfers ein Vakuum an den Verdampferkolben 13 angelegt wird.

Um zu verhindern, dass bei einer Pulvertrocknung feine Staubpartikel des Pulvers mit dem Lösungsmitteldampf, der von dem feuchten Pulver verdampft, mitgerissen werden und so in den Kühler und das Vakuumsystem des Rotationsverdampfers gelangen, kommt ein Filter 49 zum Filtern von Staubpartikeln aus einem Dampfstrom zum Einsatz. Der Filter 49 wird dabei an einer Dichteinrichtung 33' befestigt, die - mit Ausnahme des Abschnitts, der der Befestigung des Filters 49 dient - im Wesentlichen identisch zu der in Fig. 1 gezeigten Dichteinrichtung 33 ausgebildet ist, wie aus Fig. 2 ersichtlich ist.

Bei einer Pulvertrocknung wird die in Fig. 1 gezeigten Dichteinrichtung 33 durch die in Fig. 2 gezeigte Dichteinrichtung 33' (mit dem daran befestigten Filter 49) ersetzt. Der Filter 49 erstreckt sich dann ausgehend von der Dichteinrichtung 33' in Richtung des Verdampferkolbens 13 und ragt in diesen hinein. Der Filter 49 ist dabei vollständig innerhalb des Verdampferkolbens 13 angeordnet. Da der Filter 49 der Dampfdurchführung 17 in Dampfströmungsrichtung vorgeschaltet ist, kann vermieden werden, dass bei einer Trocknung von Pulver Pulverstaub in die Dampfdurchführung 17 und in den hinter der Dampfdurchführung 17 angeordneten Glassaufbau eindringt und diesen verschmutzt. Eine Reinigung des Glasaufbaus ist daher nicht erforderlich, sondern kann auf den Filter 49 beschränkt bleiben.

Der Filter 49 ist über die Dichteinrichtung 33' antriebswirksam mit dem Anschlussabschnitt 25 verbunden, d.h. bei angetriebenem Rotationsantrieb rotiert der Filter 49 mit dem Rotationsantrieb, dem Anschlussabschnitt 25 und dem Rotationsverdampfer 13 mit.

Der Filter 49 ist als Filterrohr ausgebildet und Teil einer Filtereinheit 51. An seinem in Fig. 2 linken Ende ist der Filter 49 mit einem Flansch 53 versehen, über den die Filtereinheit 51 an der Dichteinrichtung 33' befestigt ist. Der Flansch 53 kann dabei mit einem Außengewinde versehen sein, der in ein Innengewinde eines an der Dichteinrichtung 33' ausgebildeten, umlaufenden Kragens 57, der in Richtung der Rotationsachse R zeigt, eingeschraubt wird. An seinem in Fig. 2 rechten Ende ist der Filter 49 mit einem Deckel 55 verschlossen, damit durch diese Stirnseite kein Pulver in die Dampfdurchführung 17 und den der Dampfdurchführung 17 nachgeschalteten Glasaufbau gelangen kann. Die Filtereinheit 51 ist zerstörungsfrei in ihre drei Teile 49, 53, 55 zerlegbar, so dass insbesondere der Filter 49 einfach reinigbar ist.

Der Filter 49 ist als ein Glasfilter ausgebildet. Dabei besteht der Filter 49 aus einem gesinterten porösen Material, insbesondere einem offenporigen Borosilikatglas, das eine hohe chemische Beständigkeit besitzt. Grundsätzlich ist jedoch auch ein anderes Material wie Keramik oder Kunststoff geeignet. Darüber hinaus können mehrere derartige Filter vorgesehen sein, die sich jedoch voneinander unterscheiden, beispielsweise in ihrer Porosität, um mit verschiedenen Pulvern unterschiedlicher Konsistenz und/oder Korngröße verwendet zu werden.

Es kann auch eine mehrstufige Filtereinheit mit mehreren hintereinander geschalteten Filtern vorgesehen sein. Die hintereinander geschalteten Filter können sich in ihrer Porosität unterscheiden. Z.B. kann die Porengröße in Dampfströmungsrichtung schrittweise abnehmen oder zunehmen. Weiterhin können die mehreren Filter aus unterschiedlichen Materialien gefertigt sein.

Durch die erfindungsgemäße Anordnung des Filters kann gewährleistet werden, dass bei einer vollständigen Pulvertrocknung in einem Rotationsverdampfer kein Pulverstaub in die Dampfdurchführung oder den der Dampfdurchführung nachgeschalteten Glasaufbau gelangen kann, so dass keine aufwändige Reinigung des Rotationsverdampfers erforderlich ist.

### Bezugszeichenliste

- 13: Verdampferkolben
- 17: Dampfdurchführung
- 19: Bauch
- 21: Hals
- 23: Verbindungsstelle
- 25: Anschlussabschnitt
- 27: Überwurfelement
- 29: Leitung
- 31: Klemmelement
- 33: Dichteinrichtung
- 33': Dichteinrichtung
- 35: Boden
- 37: Aufnahme
- 39: Dichtringträger
- 41: Dichtring
- 43: Dichtlippe
- 45: O-Ring
- 49: Filter
- 51: Filtereinheit
- 53: Flansch
- 55: Deckel
- 57: Kragen
- R: Rotationsachse

## Patentansprüche

1. Rotationsverdampfer mit einem Rotationsantrieb, einem von dem Rotationsantrieb um eine Rotationsachse (R) drehbaren Verdampferkolben (13), einer Dampfdurchführung (17) und einem an die Dampfdurchführung (17) in Dampfströmungsrichtung anschließenden Glasaufbau,
wobei ein dem Glasaufbau, insbesondere der Dampfdurchführung (17), vorgeschalteter Filter (49) zum Filtern von Feststoffen aus einem Dampfstrom vorgesehen ist,
**dadurch gekennzeichnet, dass**
der Filter (49) zumindest teilweise innerhalb des Verdampferkolbens (13) angeordnet ist.

2. Rotationsverdampfer nach Anspruch 1,
**dadurch gekennzeichnet, dass**
der Rotationsverdampfer derart ausgebildet ist, dass der Filter (49) mit dem Verdampferkolben (13) mitdreht.

3. Rotationsverdampfer nach Anspruch 1 oder 2,
**dadurch gekennzeichnet, dass**
ein Anschlussabschnitt (25) für den Verdampferkolben (13) vorgesehen ist, der an dem Rotationsantrieb angebracht ist, wobei der Filter (49) antriebswirksam mit dem Anschlussabschnitt (25) verbunden ist.

4. Rotationsverdampfer nach Anspruch 3,
**dadurch gekennzeichnet, dass**
der Filter (49) an einer Dichteinrichtung (33'), insbesondere einer Dichtscheibe mit einer Durchführung für die Dampfdurchführung (17), befestigt ist, durch die die Dampfdurchführung (17) gegenüber dem Anschlussabschnitt (25) abgedichtet ist.

5. Rotationsverdampfer nach Anspruch 4,
**dadurch gekennzeichnet, dass**
der Anschlussabschnitt (25) eine Aufnahme (37) für den Verdampferkolben (13) aufweist, in die die Dichteinrichtung (33') eingesetzt ist, wobei bevorzugt die Aufnahme (37) einen Aufnahmegrund (35) aufweist und die Dichteinrichtung (33') zwischen dem Aufnahmegrund (35) und einem Hals (21) des Verdampferkolbens (13), insbesondere einer flanschförmigen Verbindungsstelle (23) des Halses (21) des Verdampferkolbens (13), angeordnet, insbesondere geklemmt, ist.

6. Rotationsverdampfer nach Anspruch 4 oder 5,
**dadurch gekennzeichnet, dass**
der Filter (49) durch eine Schraubverbindung mit der Dichteinrichtung (33') verbunden ist.

7. Rotationsverdampfer nach zumindest einem der Ansprüche 4 bis 6,
**dadurch gekennzeichnet, dass**
die Dichteinrichtung (33') einen in Richtung der Rotationsachse (R) gerichteten, insbesondere umlaufenden, Kragenabschnitt (57) aufweist, an dem der Filter (49) befestigt ist.

8. Rotationsverdampfer nach zumindest einem der Ansprüche 4 bis 7,
**dadurch gekennzeichnet, dass**
eine weitere Dichteinrichtung (33) vorgesehen ist, durch die die Dampfdurchführung (17) gegenüber dem Anschlussabschnitt (25) abdichtbar ist, an der der Filter (49) ohne weitere Hilfsmittel nicht befestigbar ist und die anstelle der Dichteinrichtung (33'), an der der Filter (49) befestigt ist, mit dem Rotationsverdampfer verwendbar ist.

9. Rotationsverdampfer nach zumindest einem der vorstehenden Ansprüche,
**dadurch gekennzeichnet, dass**
der Filter (49) in den Verdampferkolben (13) hineinragt.

10. Rotationsverdampfer nach zumindest einem der vorstehenden Ansprüche,
**dadurch gekennzeichnet, dass**
der Filter (49) vollständig innerhalb des Verdampferkolbens (13) angeordnet ist.

11. Rotationsverdampfer nach zumindest einem der vorstehenden Ansprüche,
**dadurch gekennzeichnet, dass**
der Filter (49) Teil einer Filtereinheit (51) ist, die zerstörungsfrei in mehrere Teile (49, 53, 55) zerlegbar ist.

12. Rotationsverdampfer nach zumindest einem der vorstehenden Ansprüche,
**dadurch gekennzeichnet, dass**
der Filter (49) als ein länglicher Hohlkörper, insbesondere rohrförmig, ausgebildet ist.

13. Rotationsverdampfer nach zumindest einem der vorstehenden Ansprüche,
**dadurch gekennzeichnet, dass**
der Filter (49) an einem stirnseitigen Ende mit einem Verbindungsabschnitt (53) zur Befestigung des Filters (49) versehen ist und/oder an einem, insbesondere in den Verdampferkolben (13) hineinragenden, stirnseitigen Ende mit einem Verschlusselement (55) verschlossen ist.

14. Rotationsverdampfer nach zumindest einem der vorstehenden Ansprüche,
**dadurch gekennzeichnet, dass**
der Filter (49) aus einem, insbesondere gesinterten, porösen Material, insbesondere Glas, Keramik oder Kunststoff, gefertigt ist.

15. Rotationsverdampfer nach zumindest einem der vorstehenden Ansprüche,
**dadurch gekennzeichnet, dass**
mehrere Filter (49) vorgesehen sind, die sich voneinander unterscheiden, insbesondere in Konstruktion, Abmessung, Material, und/oder Porosität, und die wahlweise mit dem Rotationsverdampfer verwendbar sind, und/oder dass mehrere hintereinander geschaltete Filter vorgesehen sind, die jeweils Teil einer gemeinsamen, insbesondere mehrstufigen, Filtereinheit sind.

## Claims

1. A rotary evaporator having a rotary drive, having an evaporator flask (13) rotatable about an axis of rotation (R) by the rotary drive, having a vapor tube (17), and having a glass structure adjoining the vapor tube (17) in the direction of the vapor flow,
wherein a filter (49) connected upstream of the glass structure, in particular upstream of the vapor tube (17), is provided for filtering solids from a vapor flow,
**characterized in that**
the filter (49) is at least partly arranged within the evaporator flask (13).

2. A rotary evaporator according to claim 1,
**characterized in that**
the rotary evaporator is configured such that the filter (49) rotates along with the evaporator flask (13).

3. A rotary evaporator according to claim 1 or 2,
**characterized in that**
a connection section (25) is provided for the evaporator flask (13) and is attached to the rotary drive, with the filter (49) being drive-effectively connected to the connection section (25).

4. A rotary evaporator according to claim 3,
**characterized in that**
the filter (49) is fastened to a sealing device (33'), in particular to a sealing disk having a leadthrough for the vapor tube (17), by which the vapor tube (17) is sealed with respect to the connection section (25).

5. A rotary evaporator according to claim 4,
**characterized in that**
the connection section (25) has a receiver (37) for the evaporator flask (13) into which the sealing device (33') is inserted, with the receiver (37) preferably having a receiver base (35) and with the sealing device (33') preferably being arranged, in particular clamped, between the receiver base (35) and a neck (21) of the evaporator flask (13), in particular a flange-like connection point (23) of the neck (21) of the evaporator flask (13).

6. A rotary evaporator according to claim 4 or 5,
**characterized in that**
the filter (49) is connected to the sealing device (33') by a screw connection.

7. A rotary evaporator according to at least one of the claims 4 to 6,
**characterized in that**
the sealing device (33') has a collar section (57) which is in particular peripheral, which is directed in the direction of the axis of rotation (R) and to which the filter (49) is fastened.

8. A rotary evaporator according to at least one of the claims 4 to 7,
**characterized in that**
a further sealing device (33) is provided by which the vapor tube (17) is sealable with respect to the connection section (25), to which the filter (49) is not fastenable without further aids and which is usable with the rotary evaporator instead of the sealing device (33') to which the filter (49) is fastened.

9. A rotary evaporator according to at least one of the preceding claims,
**characterized in that**
the filter (49) projects into the evaporator flask (13).

10. A rotary evaporator according to at least one of the preceding claims,
**characterized in that**
the filter (49) is completely arranged within the evaporator flask (13).

11. A rotary evaporator according to at least one of the preceding claims,
**characterized in that**
the filter (49) is part of a filter unit (51) which can be non-destructively dismantled into a plurality of parts (49, 53, 55).

12. A rotary evaporator according to at least one of the preceding claims,
**characterized in that**
the filter (49) is configured as an elongate hollow body, in particular as tubular.

13. A rotary evaporator according to at least one of the preceding claims,
**characterized in that**
the filter (49) is provided at a front-face end with a connection section (53) for fastening the filter (49) and/or is closed at a front-face end, which in particular projects into the evaporator flask (13), by a closure element (55).

14. A rotary evaporator according to at least one of the preceding claims,
**characterized in that**
the filter (49) is produced from a porous material which is in particular sintered, in particular from glass, a ceramic material or plastic.

15. A rotary evaporator according to at least one of the preceding claims,
**characterized in that**
a plurality of filters (49) are provided which differ from one another, in particular in design, dimensions, materials and/or porosity, and which are selectively usable with the rotary evaporator,
and/or **in that** a plurality of filters connected one after the other are provided which are each part of a common, in particular multi-stage, filter unit.

## Revendications

1. Evaporateur rotatif comprenant un entraînement rotatif, un ballon d'évaporation (13) pouvant être tourné autour d'un axe de rotation (R) par l'entraînement rotatif, un passage de vapeur (17) et une structure en verre se raccordant au passage de vapeur (17) dans le sens d'écoulement de la vapeur,
un filtre (49) destiné à filtrer les matières solides d'un flux de vapeur étant monté en amont de la structure en verre, en particulier en amont du passage de vapeur (17),
**caractérisé en ce que**
le filtre (49) est disposé au moins partiellement à l'intérieur du ballon d'évaporation (13).

2. Evaporateur rotatif selon la revendication 1,
**caractérisé en ce que**
l'évaporateur rotatif est conçu de telle sorte que le filtre (49) tourne avec le ballon d'évaporation (13).

3. Evaporateur rotatif selon la revendication 1 ou 2,
**caractérisé en ce que**
il est prévu une portion de raccordement (25) pour le ballon d'évaporation (13), qui est montée sur l'entraînement rotatif, le filtre (49) étant relié en entraînement à la portion de raccordement (25).

4. Evaporateur rotatif selon la revendication 3,
**caractérisé en ce que**
le filtre (49) est fixé à un dispositif d'étanchéité (33'), en particulier à un disque d'étanchéité ayant un passage pour le passage de vapeur (17), par lequel le passage de vapeur (17) est rendu étanche par rapport à la portion de raccordement (25).

5. Evaporateur rotatif selon la revendication 4,
**caractérisé en ce que**
la portion de raccordement (25) présente un logement (37) pour le ballon d'évaporation (13), dans lequel est inséré le dispositif d'étanchéité (33'), le logement (37) présentant de préférence un fond de logement (35), et le dispositif d'étanchéité (33') étant disposé, en particulier serré, entre le fond de logement (35) et un col (21) du ballon d'évaporation (13), en particulier un emplacement de liaison (23) en forme de bride du col (21) du ballon d'évaporation (13).

6. Evaporateur rotatif selon la revendication 4 ou 5,
**caractérisé en ce que**
le filtre (49) est relié au dispositif d'étanchéité (33') par un assemblage vissé.

7. Evaporateur rotatif selon l'une au moins des revendications 4 à 6,
**caractérisé en ce que**
le dispositif d'étanchéité (33') présente une portion de collerette (57), en particulier périphérique, orientée en direction de l'axe de rotation (R), à laquelle est fixé le filtre (49).

8. Evaporateur rotatif selon l'une au moins des revendications 4 à 7,
**caractérisé en ce que**
il est prévu un autre dispositif d'étanchéité (33) par lequel le passage de vapeur (17) peut être rendu étanche par rapport à la portion de raccordement (25), auquel le filtre (49) ne peut pas être fixé sans autre moyen auxiliaire et qui peut être utilisé avec l'évaporateur rotatif à la place du dispositif d'étanchéité (33') auquel est fixé le filtre (49).

9. Evaporateur rotatif selon l'une au moins des revendications précédentes,
**caractérisé en ce que**
le filtre (49) pénètre dans le ballon d'évaporation (13).

10. Evaporateur rotatif selon l'une au moins des revendications précédentes,
**caractérisé en ce que**
le filtre (49) est disposé entièrement à l'intérieur du ballon d'évaporation (13).

11. Evaporateur rotatif selon l'une au moins des revendications précédentes,
**caractérisé en ce que**
le filtre (49) fait partie d'une unité de filtration (51) qui peut être démontée de manière non destructive en plusieurs parties (49, 53, 55).

12. Evaporateur rotatif selon l'une au moins des revendications précédentes,
**caractérisé en ce que**
le filtre (49) est conçu comme un corps creux allongé, en particulier tubulaire.

13. Evaporateur rotatif selon l'une au moins des revendications précédentes,
**caractérisé en ce que**
le filtre (49) est pourvu, à une extrémité frontale, d'une portion de liaison (53) pour la fixation du filtre (49) et/ou est obturé, à une extrémité frontale pénétrant en particulier dans le ballon d'évaporation (13), par un élément d'obturation (55).

14. Evaporateur rotatif selon l'une au moins des revendications précédentes,
**caractérisé en ce que**
le filtre (49) est fabriqué en un matériau poreux, en particulier fritté, en particulier en verre, en céramique ou en matière plastique.

15. Evaporateur rotatif selon l'une au moins des revendications précédentes,
**caractérisé en ce que**
il est prévu plusieurs filtres (49) qui se distinguent les uns des autres, en particulier par leur construction, leurs dimensions, leur matériau et/ou leur porosité, et qui peuvent être utilisés au choix avec l'évaporateur rotatif, et/ou **en ce qu'**il est prévu plusieurs filtres montés les uns derrière les autres, qui font chacun partie d'une unité de filtration commune, en particulier à plusieurs étages.
